# EUROPÄISCHE PATENTSCHRIFT

(11) **EP 1 996 449 B1**
(45) Veröffentlichungstag und Bekanntmachung des Hinweises auf die Patenterteilung: **09.03.2011**
(21) Anmeldenummer: 07710528.6
(22) Anmeldetag: 22.03.2007
(51) Int. Cl.: B62K 25/28, B62M 23/02

(54) **FAHRZEUG**
VEHICLE
VEHICULE

(30) Priorität: 23.03.2006 AT 4922006
(43) Veröffentlichungstag der Anmeldung: 03.12.2008
(73) Patentinhaber: Spinwood Trading & Consulting Ltd., 3723 Limassol (CY)
(72) Erfinder: GULAS, Stefan, A-4865 Nussdorf (AT)
(74) Vertreter: Babeluk, Michael
(86) Internationale Anmeldenummer: PCT/AT2007/000139
(87) Internationale Veröffentlichungsnummer: WO 2007/106922

(56) Entgegenhaltungen:
- EP-A1- 0 079 573
- EP-A1- 0 988 217
- WO-A-00/43259
- WO-A-2004/067366
- WO-A2-00/59773
- WO-A2-03/097435

## Beschreibung

Die Erfindung betrifft ein Fahrzeug mit einem Rahmen, einer am Rahmen um eine erste Achse drehbar gelagerten Drehkurbel, einem Antriebsmotor, einem Antriebsriemen oder einer Antriebskette zur Kraftübertragung vom Antriebsmotor auf ein Antriebsrad, wobei das Antriebsrad über eine Schwinge federnd am Rahmen gelagert ist.

Aus der EP 0 079 573 ist ein Fahrzeug mit dem Merkmalen des Oberbegriffes des Anspruchs 1 bekannt.

Es ist bekannt, ein Fahrzeug wie etwa ein Fahrrad mit einem Antriebsmotor auszustatten, der das Fahrzeug antreibt und gleichzeitig eine Tretkurbel vorzusehen, die vom Benutzer des Fahrzeugs angetrieben ist. Mit einem solchen Fahrzeug können wesentlich höhere Geschwindigkeiten erreicht werden, als dies mit herkömmlichen Fahrrädern der Fall ist, die ausschließlich durch Muskelkraft angetrieben werden. Aufgrund der höheren Fahrgeschwindigkeit kommt einer effizienten Federung der Räder des Fahrzeugs eine größere Bedeutung zu, als dies bei herkömmlichen Fahrrädern der Fall ist. Die Federung des Hinterrads eines solchen Fahrzeugs erfolgt üblicherweise über eine Schwinge, die am Rahmen schwenkbar befestigt ist und die durch ein Feder- bzw. Dämpfungselement am Rahmen abgestützt ist. Der Antrieb des Antriebsrads erfolgt in vielen Fällen über eine Kette, die einerseits über ein am Rahmen gelagertes erstes Zahnrad und andererseits ein am Antriebsrad befestigtes zweites Zahnrad geführt ist. Alternativ zur Kette kann ein Antriebsriemen vorgesehen sein, der beispielsweise als Zahnriemen oder Keilrippenriemen ausgebildet ist. Bei herkömmlichen Fahrzeugen wird die Antriebskette bzw. der Antriebsriemen durch ein Spannglied in gespanntem Zustand gehalten, das insbesondere etwaige Änderungen des Abstands zwischen dem ersten Zahnrad und dem zweiten Zahnrad ausgleicht. Mit einer solchen Antriebsanordnung kann jedoch Drehmoment auf das Antriebsrad nur in einer Richtung übertragen werden, das heißt, dass es ausschließlich möglich ist, dass der Antriebsmotor das Antriebsrad in Vorwärtsrichtung antreibt. Mit dieser Anordnung ist es aber nicht möglich, ein regeneratives Bremsen, das die Drehmoment in die dem Antriebsmoment entgegen gesetzte Seite aufbringt, umzusetzen.

Es hat sich nun herausgestellt, dass diese Einschränkung für elektrisch angetriebene Fahrzeuge hinderlich ist und die mögliche Flexibilität in der Anwendung und Erhöhung der Reichweite einer Batterieladung beeinträchtigt.

Aufgabe der vorliegenden Erfindung ist es, diese Nachteile zu vermeiden und eine Lösung anzugeben, die eine größtmögliche Flexibilität bei der Gestaltung des Antriebs eines solchen Fahrzeugs bietet.

Erfindungsgemäß werden diese Aufgaben dadurch gelöst, dass die Schwenkachse der Schwinge gegenüber dem Rahmen koaxial zum Antriebsmotor ist und mit der Achse eines ersten Zahnrads zusammenfällt, das vom Antriebsmotor angetrieben ist und um das der Antriebsriemen bzw. die Antriebskette umgelenkt ist.

Wesentlich an der vorliegenden Erfindung ist, dass durch die besondere Gestaltung des Antriebssystems ein Spannelement für die Antriebskette bzw. den Antriebsriemen entfallen kann, da sich der Abstand der Achsen des ersten Zahnrads und des zweiten Zahnrads durch das Einfedern des Antriebsrads nicht ändert. Auf diese Weise kann Drehmoment zwischen dem ersten und dem zweiten Zahnrad in beide Richtungen problemlos übertragen werden. Wenn der Antriebsmotor als Elektromotor ausgebildet ist, ist es somit nicht nur möglich das Antriebsrad über den Antriebsstrang zu bremsen, sondern es kann auch Energie in die mitgeführte Batterie zurückgespeist werden. Aber auch im Fall es Antriebs durch eine Brennkraftmaschine ist es nützlich, eine Geschwindigkeitssteuerung über den Antriebsmotor vornehmen zu können.

Erfindungsgemäß ist der Antriebsmotor koaxial zum ersten Zahnrad. Auf diese Weise kann eine besonders kompakte Ausführung erreicht werden. Im Hinblick auf die baulichen Gegebenheiten ist es weiterhin von Vorteil, wenn die erste Achse im Abstand von der Achse des ersten Zahnrads angeordnet ist. Insbesondere sollte dabei die Achse der Drehkurbel vor der Achse des ersten Zahnrads gelegen sein.

Erfindungsgemäß ist der Antriebsmotor zumindest teilweise innerhalb des Schwenkbereichs der Tretkurbel angeordnet. Dies bedeutet, dass zumindest ein Teil des Antriebsmotors, der ausreichend flach ausgebildet sein muss, innerhalb des zylindrischen Bereichs liegt, der in Axialrichtung durch die Kreise begrenzt ist, die von den Tretkurbeln während ihrer Drehbewegung überstrichen werden. Auf diese Weise wird nicht nur eine besonders kompakte Bauweise erreicht, es kann auch eine besonders vorteilhafte Gewichtsverteilung sichergestellt werden. Darüber hinaus kann eine relativ großzügig dimensionierte Schwinge realisiert werden.

Erfindungsgemäß ist der Antriebsmotor fest mit der Schwinge verbunden. Bei diesem Merkmal wird der Einfederzustand der Schwinge durch das vom Antriebsmotor aufgebrachte Drehmoment beeinflusst.

Erfindungsgemäß ist das Antriebsrad gegenüber der Tretkurbel frei drehbar. Auf diese Weise ist es möglich, die Antriebskurbel lediglich zur Steuerung des Fahrzeugs heranzuziehen und gegebenenfalls über einen Generator Strom zu erzeugen, der in das elektrische System eingespeist wird.

In der Folge wird die Erfindung anhand des in den Figuren dargestellten Ausführungsbeispiels näher erläutert. Es zeigen:
- Fig.1: eine schematische Darstellung eines erfindungsgemäßen Fahr- zeugs; und
- Fig. 2: einen Schnitt nach Linie II - II in Fig. 1 in vergrößertem Maßstab.

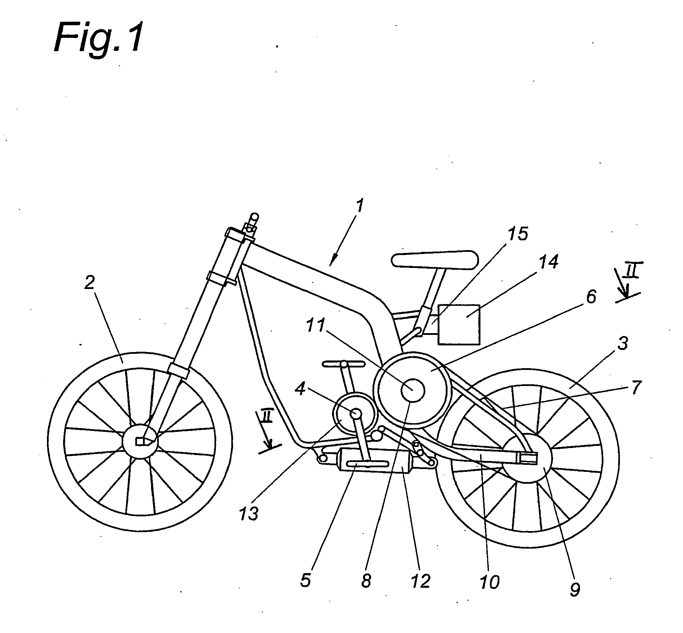

Das Fahrzeug gemäß Fig. 1 besteht aus einem Rahmen 1, an dem in der Art eines Fahrrads ein Vorderrad 2 und ein Hinterrad 3 angeordnet sind, welches als Antriebsrad ausgebildet ist.

Am Rahmen 1 ist um eine erste Achse 4 drehbar eine Tretkurbel 5 gelagert. Hinter der Tretkurbel ist ein Elektromotor 6 am Rahmen 1 befestigt, der über eine Antriebskette 7 das Antriebsrad 3 antreibt. Die Antriebskette 7 ist über ein erstes Zahnrad 8, das koaxial mit dem Antriebsmotor 6 ist, und ein zweites Zahnrad 9, das koaxial mit dem Antriebsrad 3 ist, geführt. Das Antriebsrad 3 ist auf einer Schwinge 10 gelagert, die um eine Achse 11 schwenkbar am Rahmen 1 gelagert ist, die gleichzeitig die Achse des Antriebsmotors 6 und des ersten Zahnrads 8 darstellt. Die Schwinge 10 ist über ein Federelement 12 am Rahmen 1 abgestützt.

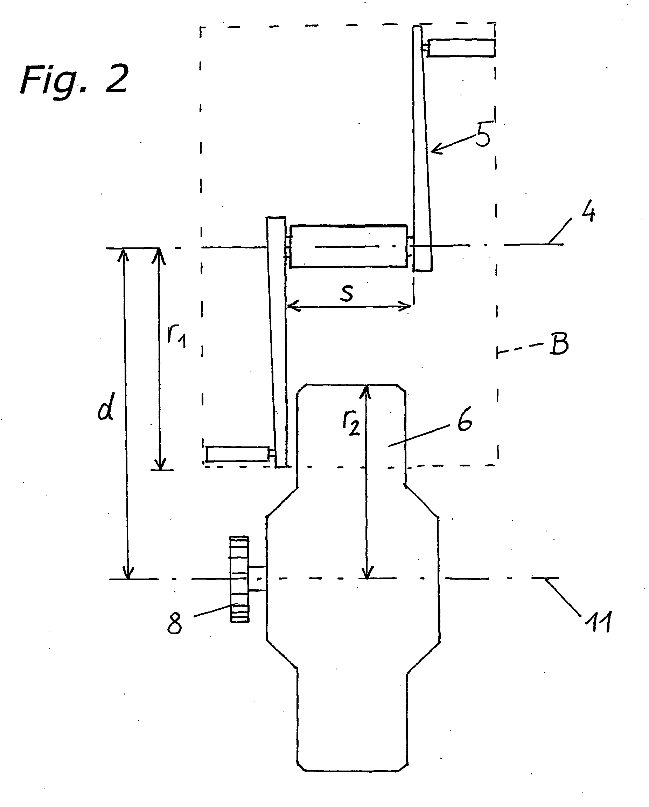

Aus Fig. 2 ist ersichtlich, dass der Abstand d der Achsen 4 und 11 kleiner ist als die Summe der Radien ri der Tretkurbel 5 und r₂ des Antriebsmotors 6, so dass der Antriebsmotor 6 zumindest teilweise innerhalb des Schwenkbereichs B der Tretkurbel 5 angeordnet ist, der mit unterbrochenen Linien angedeutet ist. Es ist jedoch anzumerken, dass die Achse 11 des Antriebsmotors 6 außerhalb des Schwenkbereichs B der Tretkurbel 5 liegt, was es ermöglicht, dass das Zahnrad 8 in Axialrichtung über den inneren Freiraum s zwischen den Tretkurbeln 5 hinausragt, was die konstruktiven Freiheiten entsprechend verbessert.

Die Tretkurbel 5 ist weiters mit einem Generator 13 verbunden, der durch die Betätigung der Tretkurbel 5 durch den nicht dargestellten Benutzer des Fahrzeugs Strom erzeugt, der in einer aufladbaren Batterie 14 gespeichert wird. Gleichzeitig wird der Antriebsmotor 6 durch die aufladbare Batterie 14 mit Energie versorgt. Eine Steuerungseinrichtung ist mit 15 angedeutet, die den Antriebsmotor 6 im Wesentlichen in Abhängigkeit von der Betätigung der Tretkurbel 5 ansteuert.

Die Bremsung des Fahrzeugs kann durch eine entsprechende Umsteuerung des Antriebsmotors 6 bewirkt werden, so dass dieser im Schiebebetrieb als Generator ebenfalls Strom erzeugt, der in der aufladbaren Batterie 14 gespeichert wird. Auf diese Weise ist eine energetisch besonders sinnvolle Nutzung des Fahrzeugs möglich.

## Patentansprüche

1. Fahrzeug mit einem Rahmen (1), einer am Rahmen (1) um eine erste Achse (4) drehbar gelagerten Tretkurbel (5), einem Antriebsmotor (6), einem Antriebsriemen oder einer Antriebskette (7) zur Kraftübertragung vom Antriebsmotor (6) auf ein Antriebsrad (3), wobei das Antriebsrad (3) über eine Schwinge (10) federnd am Rahmen (1) gelagert ist, wobei der Antriebsmotor (6) fest mit der Schwinge (10) verbunden ist und wobei weiters der Antriebsmotor (6) zumindest teilweise innerhalb des Schwenkbereichs (B) der Tretkurbel (5) angeordnet ist, **dadurch gekennzeichnet, dass** die Schwenkachse (11) der Schwinge (10) gegenüber dem Rahmen (1) koaxial zum Antriebsmotor (6) ist und mit der Achse (11) eines ersten Zahnrads (8) zusammenfällt, das vom Antriebsmotor (6) angetrieben ist und um das der Antriebsriemen bzw. die Antriebskette (7) umgelenkt ist, und dass das Antriebsrad (3) gegenüber der Tretkurbel (5) frei drehbar ist und dass weiters die Schwenkachse (11) der Schwinge (10) einen Abstand (d) von einer ersten Achse (4) aufweist, um die die Tretkurbel (5) drehbar ist.

2. Fahrzeug nach Anspruch 1, **dadurch gekennzeichnet, dass** die erste Achse (4) in einem Abstand (d) von der Achse (11) des ersten Zahnrads (8) angeordnet ist.

3. Fahrzeug nach Anspruch 2, **dadurch gekennzeichnet, dass** die erste Achse (4) vor der Achse (11) des ersten Zahnrads (8) angeordnet ist.

4. Fahrzeug nach einem der Ansprüche 1 bis 3, **dadurch gekennzeichnet, dass** der Antriebsmotor (6) als Elektromotor ausgebildet ist.

5. Fahrzeug nach Anspruch 4, **dadurch gekennzeichnet, dass** die Tretkurbel (5) mit einem Generator verbunden ist.

## Claims

1. A vehicle, comprising a frame (1), a pedal crank (5) which is mounted on the frame (1) in a manner so that it can rotate about a first axis (4), a drive motor (6), a drive belt or drive chain (7) for transmission of power from the drive motor (6) to a drive wheel (3), with the drive wheel (3) being mounted resiliently on the frame (1) via a rocker (10), with the drive motor (6) being rigidly connected with the rocker (10) and with further the drive motor (6) being arranged at least partly within the pivoting area (B) of the pedal crank (5), **characterised in that** the pivot axis (11) of the rocker (10) in relation to the frame (1) is coaxial with respect to the drive motor (6) and coincides with the axis (11) of a first gearwheel (8) which is driven by the drive motor (6) and about which the drive belt or drive chain (7) is deflected, and that the drive wheel (3) is freely rotatable in relation to the pedal crank (5) and further the pivot axis (11) of the rocker (10) has a distance (d) from a first axis (4), about which the pedal crank (5) is rotatable.

2. A vehicle according to claim 1, **characterised in that** the first axis (4) is arranged at a distance (d) from the axis (11) of the first gearwheel (8).

3. A vehicle according to claim 2, **characterised in that** the first axis (4) is arranged before the axis (11) of the first gearwheel (8).

4. A vehicle according to one of the claims 1 to 3, **characterised in that** the drive motor (6) is arranged as an electromotor.

5. A vehicle according to claim 4, **characterised in that** the pedal crank (5) is connected with a generator.

## Revendications

1. Véhicule comportant un cadre (1) avec une manivelle de pédale (5) montée à rotation autour d'un premier axe (4) sur le cadre (1), un moteur (6), une courroie d'entraînement ou une chaîne d'entraînement (7) pour transmettre le couple du moteur (6) à une roue motrice (3),
- la roue motrice (3) étant montée à ressort sur le cadre (1) par l'intermédiaire d'un bras (10),
- le moteur (6) étant solidaire du bras (10) et en outre,
- le moteur (6) vient au moins en partie dans la plage de pivotement (B) de la manivelle de pédale (5),
véhicule **caractérisé en ce que**
l'axe de pivotement (11) du bras (10) par rapport au cadre (1) est coaxial au moteur (6) et coïncide avec l'axe (11) d'une première roue dentée (8) entraînée par le moteur (6) et autour duquel passe la courroie d'entraînement ou la chaîne d'entraînement (7), et
- la roue motrice (3) est libre en rotation par rapport à la manivelle de pédale (5) et en outre,
- l'axe de pivotement (11) du bras (10) est distant de la distance (d) par rapport au premier axe (4) autour duquel tourne la manivelle de pédale (5).

2. Véhicule selon la revendication 1,
**caractérisé en ce que**
le premier axe (4) est à la distance (d) de l'axe (11) du premier pignon denté (8).

3. Véhicule selon la revendication 2,
**caractérisé en ce que**
le premier axe (4) est installé devant l'axe (11) du premier pignon denté (8).

4. Véhicule selon l'une des revendications 1 à 3,
**caractérisé en ce que**
le moteur (6) est un moteur électrique.

5. Véhicule selon la revendication 4,
**caractérisé en ce que**
la manivelle de pédale (5) est liée à un générateur.
